# EUROPEAN PATENT APPLICATION

(11) **EP 2 701 078 A1**
(43) Date of publication of application: **26.02.2014**
(21) Application number: 12306020.4
(22) Date of filing: 24.08.2012
(51) Int. Cl.: G06F 17/30

(54) **Process for summarising automatically a video content for a user of at least one video service provider in a network**

(71) Applicant: Alcatel Lucent, 75007 Paris (FR)
(72) Inventor: Outtagarts, Abdelkader, 91620 Nozay (FR); Marilly, Emmanuel, 91620 Nozay (FR)
(74) Representative: Sayettat, Julien Christian

(57) **Abstract**

Process for summarising automatically a video content (B) for a user of at least one video service provider (1) in a network, said process providing for:
- monitoring information about at least two video mashups (A) that are generated by users of such video service providers (1), said mashups containing at least one shot (C, D, E, F) of said video content;
- analysing said information to identify the most popular shots (C) of said video content;
- editing a video summary (S1, S2) comprising at least one of said identified shots.

## Description

The invention relates to a process for summarising automatically a video content for a user of at least one video service provider in a network, to an application and to an architecture that comprise means for implementing such a process.

A video summary of a video content can be in the form of a video sequence comprising portions of said video content, i.e. a shorter version of said video content. A video summary can also be in the form of a hypermedia document comprising selected images of the video content, a user interacting with said images to access internal parts of said video content.

At lot of works have been done in the domain of automatic video summarisation, notably by academic laboratories such as the French research centers INRIA and EURECOM, or the American universities MIT and Carnegie Mellon, or even by companies such as Microsoft®, Hewlett-Packard®, IBM® or Motorola®.

Indeed, video summarisation presents a lot of interest for several applications, because it notably allows implementing archiving processes and other more complex features, such as for example video teleconferences, video mail or video news.

For example, the research laboratory of Microsoft® has published some papers about the lead works on video summary, such as the article "Soccer Video Summarization Using Enhanced Logo Detection" (M. EL Deeb, B. Abou Zaid, H. Zawbaa, M. Zahaar, and M. El-Saban, 2009), which is available at the address http://research.microsoft.com/apps/pubs/default.aspx?id=101167. This article concerns a method for summarising a soccer match video wherein an algorithm detects replay shots for delineating interesting events. In general, works of Microsoft® are based on low level video analyzers and rule engines, and use algorithms that are not only fixed, without allowing the user to edit a personalised video summary, but also dedicated to only a specific semantic field, such as soccer.

The research laboratory of the Mitsubishi® society has been proposing studies on video summarisation for Personal Video Recorders (PVR), as explained in the article available at http://www.merl.com/projects/VideoSummarization, and notably in the technical report "A Unified Framework for Video Summarization, Browsing and Retrieval" (Y. Rui, Z. Xiong, R. Radhakrishnan, A. Divakaran, T. S. Huang, Beckman Institute for Advanced Science and Technology, University of Illinois and Mitsubishi Electric Research Labs). These studies are based on an automatic audio visual analysis and a video skimming approach, but do not allow extracting the main key sequences of a video content.

Documents "Video summarisation : A conceptual Framework and Survey of the State of the Art" (A.G. Money and H. Agius, Journal of Visual Communication and Image Representation, Volume 19, Issue 2, Pages 121-143, 2008) and "Advances in Video Summarization and Skimming" (R. M. Jiang, A. H. Sadka, D. Crookes, in "Recent Advances in Multimedia Signal Processing and Communications", Berlin/Heidelberg: Springer, 2009) provides respectively an overview of the different known techniques for video summarisation and explanations about static and dynamic approaches of video summarisation.

To summarise, known methods for video summarisation can be split in three main groups: methods based on audio stream analysis, methods based on video stream analysis and hybrid methods based on both of said analysis. Such methods are classically based on metadata extractions from the audio and/or the video analysis by means of dedicated algorithms.

Concerning the drawbacks, such methods have to deal with the semantic gap between audio and video analysis and the limitations of their analysis algorithms. Thus, the audio based methods are sometimes not sufficient as audible speeches are linked to the video theme. Moreover, the video based methods experience difficulties to identify the context of the video, notably when said context has a high level of semantics, which triggers a high semantic gap. Besides, the hybrid methods encounter difficulties to render the final summary and stay very dependent to the video theme.

In particular, video summarisations are based on video analysis and segmentation. Such methods are notably described in further details in the following documents: "Surveillance Video Summarisation Based on Moving Object Detection and Trajectory Extraction" (Z. Ji, Y. Su, R. Qian, J. Ma, 2nd International Conference on Signal Processing Systems, 2010), "An Improved Sub-Optimal Video Summarization Algorithm" (L. Coelho, L.A. Da Silva Cruz, L. Ferreira, P.A. Assunção, 52nd International Symposium ELMAR-2010), "Rapid Video Summarisation on Compressed Video" (J. Almeida, R. S. Torres, N.J. Leite, IEEE International Symposium on Multimedia, 2010), "User-Specific Video Summarisation" (X. Wang, J. Chen, C. Zhu, International Conference on Multimedia and Signal Processing, 2011), "A Keyword Based Video Summarisation Learning Platform with Multimodal Surrogates" (W-H. Chang, J-C. Yang, Y-C Wu, 11th IEEE International Conference on Advanced Learning Technologies, 2011) and "Visual Saliency Based Aerial Video Summarization by Online Scene Classification" (J. Wang, Y. Wang, Z. Zhang, 6th International Conference on Image and Graphics, 2011).

However, these solutions are not suitable to summarise a significant number of video contents because of the large capacity of processing required, the limitation of the video/audio analysers and the semantic/ontology description and interpretation. Moreover, these solutions do not interact with heterogeneous and various video service providers such as those currently popular among Internet users, they are not based on users' feedbacks and they cannot propose a dynamic video summary. Besides, since they use video analysis, segmentation, and/or specific metadata ontology/semantic, their response time is very significant and there is no obvious conversion between the different used semantic descriptions.

The invention aims to improve the prior art by proposing a process for automatically summarising a video content, said process being particularly efficient for summarising a huge volume of video data coming from heterogeneous video services providers of a network, so as to provide to users of such video service providers a dynamically updated and enriched video summary while limiting the drawbacks encountered with classical method of summarisation.

For that purpose, and according to a first aspect, the invention relates to a process for summarising automatically a video content for a user of at least one video service provider in a network, said process providing for:
- monitoring information about at least two video mashups that are generated by users of such video service providers, said mashups containing at least one shot of said video content;
- analyzing said information to identify the most popular shots of said video content;
- editing a video summary comprising at least one of said identified shots.

According to a second aspect, the invention relates to an application for summarising automatically a video content from a video service provider in a network, said application comprising:
- at least one module for monitoring information about at least two video mashups that are generated by users of such video service providers, said mashups containing at least one shot of said video content, said module comprising means for analysing said information to identify the most popular shots of said video content;
- at least one module for editing a video summary comprising at least one of said identified shots.

According to a third aspect, the invention relates to an architecture for a network comprising at least one video service provider and a manual video composing application for allowing users of said network to generate video mashups from at least one video content of said service providers, said architecture further comprising an application for automatically summarising a video content for a user, said application comprising:
- at least one module for monitoring information about at least two video mashups, said mashups containing at least one shot of said video content, said module comprising means for analysing said information to identify the most popular shots of said video content;
- at least one module for editing a video summary comprising at least one of said identified shots.

Other aspects and advantages of the invention will become apparent in the following description made with reference to the appended figures, wherein:
- figure 1 represents schematically an architecture for a network comprising at least one video service provider and a manual video composing application, such as an application comprising means for implementing a process according to the invention;
- figure 2 represents schematically some of the steps of a process according to the invention;
- figure 3 represents schematically the architecture of figure 1 with only the manual video composing application and the summarising application with his modules apparent.

In relation to those figures, a process for summarising automatically a video content of a user of at least one video service provider 1 in a network, an application 2 comprising means for implementing such a process and an architecture for a network comprising at least one video service provider 1, a manual video composing application 3 and such a summarising application 2, will be described below.

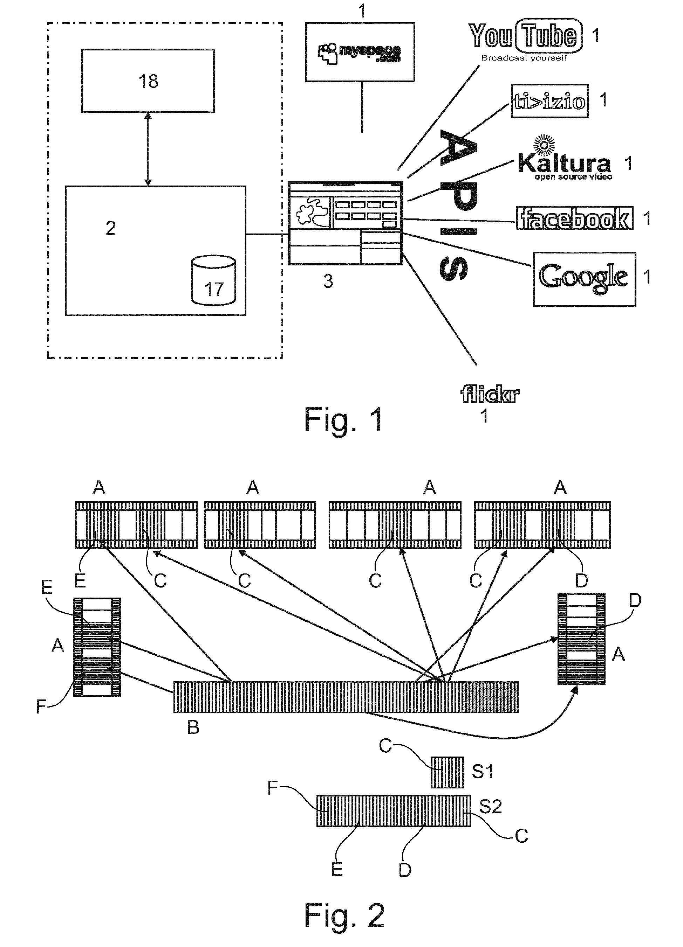

As represented on figure 1, the video service providers 1 can be video sharing service providers, such as Youtube®, Tivizio®, Kaltura® or Flickr®. They can also be social network service providers, such as Facebook®, Google® or MySpace®. Currently, hundreds of video, audio an image contents are produced by users, notably by means of smartphones or photo cameras, and published on such service providers 1.

The manual video composing application 2 can be a cloud based web 2.0 application and allows users of the network to generate video mashups A, i.e. compositions of video segments or clips and audio segments, from at least one video content B of video service providers 1 of the architecture. To do so, the manual video composing application 3 comprises at least one dedicated Application Programming Interface (API) for interacting with the video service providers 1, so as to obtain the video contents B that a user of said application wants to use for generating a video mashup A. In particular, with a web based manual video composing application 3, a user of the architecture can notably generate video mashups A in collaboration with other users of said application.

Generally speaking, a user who wants to generate a video summary of a video content B or a video mashup A of several video contents B has to view, comment and/or split said video content(s) to select the most relevant shots. Nevertheless, the selection of shots can vary a lot from one user to another, so that various video summaries and mashups A can be generated from a unique video content B.

Thus, to provide efficient summarisation of a video content B for a user of at least one video service provider 1 in the network, the process provides for monitoring information about at least two video mashups A that are generated by users of such video service providers 1 and contain at least one shot of said video content.

To do so, the architecture comprises an application 2 for summarising automatically a video content B from a video service provider 1 in the network, said application comprising at least one module for monitoring such information about at least two video mashups A containing at least one shot of said video content.

In particular, the process can provide that information about the video mashups A is monitored from descriptors of said video mashups, said descriptors being stored in a database. A descriptor of a video file, i.e. a raw video content or a video mashup, is a file with specific format, such as an .xml file, and contains technical information about said video file, such as the URL address (for Uniform Resource Locator) of the original video content, the begin and the end of said video file, the Frame Per Second (FPS) rate, or the duration of said file.

To do so, the manual video composing application 3 comprises such a database 4 wherein users of said application store the descriptors of their generated video mashups A, so that a user who wants to access to said video mashups or to the original video contents B will just extract the descriptors and thus will not need to download said video mashups or contents from the corresponding video service providers 1.

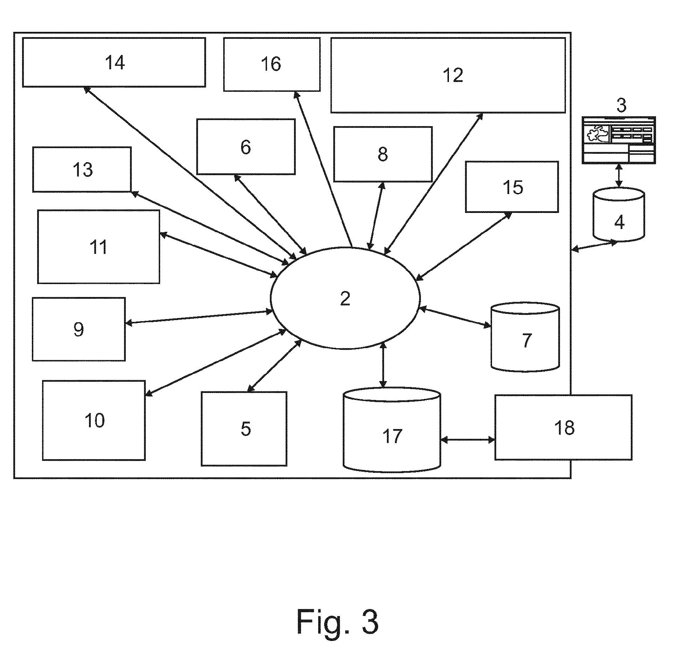

In relation to figure 3, the application 2 comprises means for interacting with the manual video composing application 3 to extract from the database 4 of said composing application the descriptors of the relevant video mashups A, so that the at least one module for monitoring of the summarising application 2 monitors information about said mashups from said descriptors.

Thus, the process provides for analysing the monitored information to identify the most popular shots of the video content B. To do so, the at least one module for monitoring of the summarising application 2 comprises means for analysing the monitored information to identify the most popular shots.

In particular, the monitored information comprises the shots of the video content B that appear in the video mashups A, so that the shots that appears the most on video mashups A can be identified as the most popular ones.

To do so, the summarising application 2 comprises a module 5 for monitoring the compositions of the video mashups A that comprise at least one shot of the video content B, notably the shots of said video content that appear in said video mashups, said module comprising means for analysing said compositions so as to extract statistical data about the shots of the video content B, and thus to identify, from said data, the shots of said video content that appear the most on video mashups A as the most popular ones. In particular, the statistical data are calculated by specific means of the manual video composing application 3 and are stored in the database 4 of said composing application, the module 5 for monitoring compositions interacting with said database to extract the statistical data that concern the shots occurring in the monitored mashups A.

The statistical data comprise notably scores of occurrences for each shot of the video content B, said scores being calculated in different contexts, such as politics, sports, or business. They can be in the form of numbers, frequencies over a period, percentages or trents, and they can also be linked to the number of views, shares, edits, comments or metadata. To summarise, all kinds of actions and/or interactions about the shots, mashups A and/or of the video content B can be recorded by the manual video composing application 3 and used as statistical data.

The process can provide to identify the most popular shots of the video content according to predefined rules. To do so, the summarising application 2 comprises at least one module 6 of predefined rules, the module 5 comprising means to interact with said module of predefined rules. In relation to figure 3, the summarising application 2 comprises a dedicated database 7 for storing the predefined rules, the module 6 of predefined rules interacting with said database upon interaction with the module 5 to extract the relevant predefined rules.

The predefined rules comprise rules for the identification of the most popular shots. For example, a rule can be provided for selecting as popular a shot with one the highest using frequency only if said shot presents a total duration less than five minutes. Moreover, a corollary rule can be provided for trimming a popular shot which total duration is more than five minutes.

In particular, for better personalisation of the summarisation, the process can provide that the rules are predefined by the user. To do so, in relation to figure 3, the summarising application 2 comprises a module 8 for allowing the user to predefine the rules, said module comprising means for providing a dedicated sub interface on the user interface of said summarising application to allow the user to make such a predefinition.

According to a non represented variant, the features of the module 8 for user predefinition and/or the database 7 for storing the predefined rules can be implemented in the module 6 of predefined rules.

The process provides for editing a video summary, said video summary comprising at least one of the identified shots of the video content B. To do so, the summarising application 2 comprises at least one module 9 for editing such a video summary in cooperation with the at least one module for monitoring and analysing.

In particular, the module 9 for editing comprises means to interact with the module 5 for monitoring and analysing the compositions of the video mashups A, so as to edit a video summary by chaining the identified most popular shots of the video content B.

The process can also provide to edit the video summary according to predefined rules. To do so, the module 6 of predefined rules can comprise dedicated rules for edition of the video summary, the module 9 for editing comprising means to interact with said module of predefined rules.

For example, predefined rules can comprise a rule indicating that a title and/or a transition must be added between the shots of the video summary. They can also comprise a rule for limiting the video summary duration to at most 10% of the total duration of the video content, or also a rule to add subtitles if possible.

In relation to figure 2, the edited video summary S1, S2 would present a different composition, and notably a different duration according to the applied predefined rules. Upon analysis of the compositions of the represented mashups A, the module 5 for such an analysis has identified the shot C as the most relevant of the video content B, such that it appears in four of said mashups. Thus, according to the predefined edition rules, the module 9 for editing will edit a short video summary S1 comprising only the most relevant shot C, or a long video summary S2 comprising also other less popular shots D, E, F of the video content B, said shots appearing at least in one of the mashups A.

Information about the video mashups A can also comprise text data that are entered by users during the generation of said mashups, said text data further being analysed to edit a text description for the video summary. To do so, the summarising application 2 comprises a module 10 for monitoring and analysing text data of video mashups A, the module 9 for editing comprising means for editing a text description for the video summary according to said analysis.

Information about the video mashups A can also comprise metadata and/or annotations, said metadata and/or annotations further being analysed to edit video transitions for the video summary. In particular, the metadata and/or annotations of a video mashup A can concern the context of the generation of said video mashup, i.e. the main topic or the targeted audience of said video mashup. To do so, the summarising application 2 comprises a module 11 for monitoring and analysing metadata and/or annotations of the video mashups A, the module 9 for editing comprising means for editing appropriate video transitions for the video summary according to said analysis.

The process can also provide, as at least one of the relevant video mashups A is generated by at least two users, to save the conversations happened between said users during the generation of said mashup, said conversations further being monitored as information about said mashup and analysed to edit the video summary. In particular, the conversations can be presented in any type of format, such as video format, audio format and/or text format.

To do so, the summarising application 2 comprises a module 12 for saving such conversations, said module comprising means for monitoring and analysing said conversations as information about the concerned video mashups A, so that the module 9 for editing edits the video summary according to said analysis.

In particular, the process can provide for continuously and dynamically updating the video summary, so that users will benefit from to-date and continuously enriched video summaries. Thus, the information can also comprise updates of the previous video mashups and/or updates of the profiles of the users that have generated said mashups, and/or even information about new generated video mashups that comprise at least one shot of the video content B. Indeed, such updates can have an impact notably on the popularity of the shots of the video content B.

To do so, the summarising application 2 comprises at least one module for monitoring and analysing at least one of such above mentioned information. In relation to figure 3, the summarising application comprises two modules 13, 14 for monitoring and analysing respectively the updates of the previous video mashups and the updates of the profiles of the users that have generated said mashups. In particular, each of these modules 13, 14 comprises means for saving links between the edited video summary and respectively the video mashups and the profiles of the users, so that the at least one module for editing edits, i.e. updates the video summary according to the monitoring and analysis of such data.

Concerning the new generated video mashups, all the previously mentioned modules 5, 10, 11, 12 for monitoring and analysing are adapted to take them into account, so that the at least one module for editing edits, i.e. updates the video summary.

In relation to figure 3, the summarising application 2 comprises the module 9 for editing new video summaries and a dedicated module 15 for editing, i.e. updating the previously edited video summaries according to the analysis of the above mentioned updating information, so as to take into account the new statistical data, text data, metadata and/or annotations. According to a non represented variant, the features of both of these modules 9, 15 for editing can be implemented in a unique module for editing.

To better personalise the video summary, the process can provide for allowing the user to give feedback on the edited video summary, said feedback further being monitored as information and analysed for editing said video summary. Moreover, the intervention of the user can also allow avoiding drawbacks of the known methods of video summaring, such as the semantic gap that can be notably observed between classical analysis of audio and video files of a video content B.

To do so, the summarising application 2 comprises a module 16 for allowing the user to give such feedback, said module comprising means for monitoring and analysing said feedback, so that the module 15 for updating edits the video summary again according to said analysis.

In relation to figures 1 and 3, the summarising application 2 comprise a database 17 for saving the descriptors of the edited video summaries, so that said descriptors will be available for users who want to see said summaries without downloading the corresponding original video contents B from the video service providers 1. To do so, the summarising application 2 comprises means to provide through its user interface a user friendly video portal search that provides to users of the network a global access point to search accurately video contents B among a huge stock provided by heterogeneous video service providers 1, and thus without downloading said contents.

In particular, as represented in figures 1 and 3, the architecture comprise at least one application or service 18 that comprises means for exploiting the video summary descriptors stored in the database 17 so as to provide dedicated services based on the video summaries, such as e-learning services, cultural event, or sports events.

To propose to-date video summaries to the users, the summarising application 2 can also comprise means to delete a video summary which corresponding video content B has been deleted from the video service providers 1 of the architecture. To do so, the summarising application 2 comprises dedicated meand for continuously checking in each of the video summary descriptors the validity of the URL address of the original video content B, so that a video summary descriptor will be deleted if said address is no longer valid.

The process provides, as users generate video mashups A from video contents B, an implicit summarisation of said contents that is notably based on statistic scores and data. Thus, the process provides a video summarisation that does not require the use of classical video and/or audio analysers, and thus allows avoiding the drawbacks generally observed with such analysers. Moreover, by using video descriptors instead of original video contents B, the process allows to gather accesses to a huge quantity of video files to a unique and accurate access point.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to assist the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

## Claims

1. Process for summarising automatically a video content (B) for a user of at least one video service provider (1) in a network, said process providing for:
- monitoring information about at least two video mashups (A) that are generated by users of such video service providers (1), said mashups containing at least one shot (C, D, E, F) of said video content;
- analyzing said information to identify the most popular shots (C) of said video content;
- editing a video summary (S1, S2) comprising at least one of said identified shots.

2. Process according to claim 1, **characterized in that** the monitored information comprise the shots (C, D, E, F) of the video content (B) that appear in the video mashups (A), the shots (C) that appear the most in video mashups (A) being identified as the most popular shots.

3. Process according to claim 1 or 2, **characterized in that** it provides to identify the most popular shots (C) of the video content (B) and/or to edit the video summary (S1, S2) according to predefined rules.

4. Process according to claim 3, **characterized in that** the rules are predefined by the user.

5. Process according to any of claims 1 to 4, **characterized in that** information about the video mashups (A) are monitored from descriptors of said video mashups, said descriptors being stored in a database (4).

6. Process according to any of claims 1 to 5, **characterized in that** information about the video mashups (A) comprise text data that are entered by users during the generation of said mashups, said text data being analyzed to edit a text description for the video summary (S1, S2).

7. Process according to any of claims 1 to 6, **characterized in that** information about the video mashups (A) comprise metadata and/or annotations, said metadata and/or annotations being analyzed to edit video transitions for the video summary (S1, S2).

8. Process according to any of claims 1 to 7, **characterized in that** at least one video mashup (A) is generated by at least two users, said process providing for saving the conversations happened between said users during the generation of said mashup, said conversations further being monitored as information and analyzed to edit the video summary (S1, S2).

9. Process according to any of claims 1 to 8, **characterized in that** the information comprises updates of the previous video mashups (A) and/or updates of the profile of the users that have generated said video mashups and/or information about new generated video mashups (A) that comprise at least one shot (C, D, E, F) of the video content (B).

10. Process according to any of claims 1 to 9, **characterized in that** it provides for allowing the user to give feedback on the edited video summary (S1, S2), said feedback further being monitored as information and analyzed for editing said video summary (S1, S2).

11. Application (2) for summarising automatically a video content (B) from a video service provider (1) in a network, said application comprising:
- at least one module (5, 10, 11, 12, 13, 14, 16) for monitoring information about at least two video mashups (A) that are generated by users of such video service providers (1), said mashups containing at least one shot (C, D, E, F) of said video content, said module comprising means for analysing said information to identify the most popular shots (C) of said video content;
- at least one module (9, 15) for editing a video summary comprising at least one of said identified shots.

12. Application (2) according to claim 11, **characterized in that** it comprises a module (5) for monitoring and analysing the shots (C, D, E, F) of the video content (B) that appear in the video mashups (A), said module identifying the shots (C) that appears the most in video mashups (A) as the most popular shots.

13. Architecture for a network comprising at least one video service provider (1) and a manual video composing application (3) for allowing users of said network to generate video mashups (A) from at least one video content (B) of said service providers, said architecture further comprising an application (2) for automatically summarising a video content (B) for a user, said application comprising:
- at least one module (5, 10, 11, 12, 13, 14, 16) for monitoring information about at least two video mashups (A), said mashups containing at least one shot (C, D, E, F) of said video content, said module comprising means for analysing said information to identify the most popular shots (C) of said video content;
- at least one module (9, 15) for editing a video summary (S1, S2) comprising at least one of said identified shots.
